(19) Europäisches Patentamt
European Patent Office
Office européen des brevets

(11) **EP 3 252 427 B1**

(12) **EUROPEAN PATENT SPECIFICATION**

(45) Date of publication and mention
of the grant of the patent:
**27.03.2019 Bulletin 2019/13**

(21) Application number: **15892868.9**

(22) Date of filing: **25.05.2015**

(51) Int Cl.:
*G01B 11/00* *(2006.01)*          *G01D 5/353* *(2006.01)*
*G01M 11/00* *(2006.01)*

(86) International application number:
**PCT/CN2015/079728**

(87) International publication number:
**WO 2016/187787 (01.12.2016 Gazette 2016/48)**

(54) **OPTICAL FIBER MEASURING METHOD, DEVICE AND SYSTEM**

GLASFASERMESSVERFAHREN, VORRICHTUNG UND SYSTEM

PROCÉDÉ, DISPOSITIF ET SYSTÈME DE MESURE DE FIBRE OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.12.2017 Bulletin 2017/49**

(73) Proprietor: HUAWEI TECHNOLOGIES CO., LTD.
**Guangdong 518129 (CN)**

(72) Inventor: **LIU, Wei**
**Shenzhen**
**Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(56) References cited:
**EP-A2- 0 959 337          EP-A2- 2 755 008
WO-A1-2011/147030          CN-A- 103 196 473
CN-A- 104 422 582          US-A- 5 621 517
US-A1- 2014 077 971          US-A1- 2014 146 312**

**Description**

**TECHNICAL FIELD**

Embodiments of the present invention relate to fiber technologies, and in particular, to a fiber measurement method, apparatus, and system.

**BACKGROUND**

An optical time domain reflectometer (Optical Time Domain Reflectometer, OTDR for short) is a precision optoelectronic integrated instrument made according to back scattering that is generated from Rayleigh scattering and Fresnel reflection when a light ray is transmitted in a fiber. It is widely used in maintenance and construction of a cable line, and can measure a fiber length, transmission attenuation of the fiber, splice attenuation, fault location, and the like. When a light pulse is transmitted in the fiber, scattering or reflection is generated because of properties of the fiber, such as a connector, a junction point, and bending or another similar structure. Some scattered or reflected light returns to the OTDR, and is measured by an OTDR detection apparatus, and optical power values are used as a time or fiber curve of different positions in the fiber.

An optical line protection board (Optical Line Protection, OLP for short) is used to construct a subsystem for performing automatic switching protection based on a fiber link. The device usually has six optical ports, and the OLP may perform light splitting on a light pulse, and the light pulse after light splitting may be separately transmitted through two fiber links. The OTDR detection apparatus receives light that is separately reflected back through the two fiber links.

However, the foregoing two channels of reflected light are both received by the OTDR detection apparatus, and interfere with each other. As a result, a fiber curve measured by the OTDR detection apparatus is a curve of mixed light, and cannot represent characteristics of any one fiber link. If an OTDR detection apparatus and an auxiliary apparatus are separately disposed on each of the two fiber links, to obtain a fiber curve of a single fiber link by separately performing measurement on the two fiber links, system performance is affected, costs are increased, and it is not beneficial to measurement of multiple fiber links.

US 2014/146312 A1 discloses an optical reflectometric method and system for characterizing an optical fiber link, wherein events in the fiber optic link under test are identified and values of parameters characterizing the events (e.g. location, insertion loss and reflectance) are extracted from an analysis of one or more reflectometric measurements performed on the optical fiber link. A loss profile and/or a reflectance profile are then constructed.

Further, WO 2011/147030 A1 discloses an OTDR device and a method for characterizing one or more events in an optical fiber link. A plurality of light acquisitions is performed. For each light acquisition, test light pulses are propagated in the optical fiber link and the corresponding return light signals from the optical fiber link are detected. The light acquisitions are performed under different acquisition conditions, for example using different pulsewidths or wavelengths. Parameters characterizing the event are derived using the detected return signal from at least two of the plurality of light acquisitions.

Finally, EP 2 755 008 A2 discloses a bi-directional optical reflectometric method for characterizing an optical fiber link.

**SUMMARY**

Embodiments of the present invention provide a fiber measurement method and apparatus to implement measurement of a single fiber link in multiple fiber links, and reduce impact on system performance as much as possible.

According to a first aspect, an embodiment of the present invention provides a fiber measurement method which is performed by an OTDR, the method including:

acquiring a detection control parameter sent by a control and communications apparatus, where the detection control parameter includes a quantity N of to-be-detected fiber links, a fiber detection distance, duration, an optical pulse width, and a modulation parameter, and N is a positive integer greater than or equal to 2;
performing N times of fiber detection according to the fiber detection distance, the duration, and the optical pulse width, to acquire N total fiber curves by means of collection, where the total fiber curves include a fiber curve corresponding to light that is formed by convergence after light is separately reflected in the N to-be-detected fiber links; and for at least N-1 times of fiber detection, each time fiber detection is performed, first performing, by using a modulation apparatus according to the modulation parameter, attenuation modulation on light that is about to enter a to-be-detected fiber link, where to-be-detected fiber links corresponding to light that is modulated each time are different, and the attenuation modulation is used to modulate the light in a manner of increasing attenuation; and calculating by using a preset curve algorithm according to the N total fiber curves and the modulation parameter, to acquire respective fiber curves of the N to-be-detected fiber links, and feeding back the fiber curves to the control and communications apparatus.

With reference to the first aspect, in a first possible implementation manner of the first aspect, N=2; and the performing N times of fiber detection according to the fiber detection distance, the duration, and the optical pulse width, to acquire N total fiber curves by means of collection includes:
performing a first time of fiber detection according to the fiber detection distance, the duration, and the optical pulse width, to acquire a first total fiber curve by means of collection; and
performing, by using the modulation apparatus according to the modulation parameter, attenuation modulation on light that is about to enter one of the to-be-detected fiber links, and performing a second time of fiber detection according to the fiber detection distance, the duration, and the optical pulse width, to acquire a second total fiber curve by means of collection.

With reference to the first aspect, in a second possible implementation manner of the first aspect, N=2; and the performing N times of fiber detection according to the fiber detection distance, the duration, and the optical pulse width, to acquire N total fiber curves by means of collection includes:

performing, by using the modulation apparatus according to the modulation parameter, attenuation modulation on light that is about to enter one of the to-be-detected fiber links, and performing a first time of fiber detection according to the fiber detection distance, the duration, and the optical pulse width, to acquire a first total fiber curve by means of collection; and
performing, by using the modulation apparatus according to the modulation parameter, attenuation modulation on light that is about to enter the other one of the to-be-detected fiber links, and performing a second time of fiber detection according to the fiber detection distance, the duration, and the optical pulse width, to acquire a second total fiber curve by means of collection.

With reference to the first aspect or either one of the first and the second possible implementation manners of the first aspect, in a third possible implementation manner of the first aspect, after the acquiring a detection control parameter sent by a control and communications apparatus, the method further includes:
feeding back a parameter acquiring response to the control and communications apparatus.

According to a second aspect, an embodiment of the present invention provides a fiber measurement method which is performed by a modulation apparatus, the method including:

acquiring a quantity N of to-be-detected fiber links and a modulation parameter that are sent by a control and communications apparatus, where N is a positive integer greater than or equal to 2;
for each time of at least N-1 times of fiber detection by an optical time domain reflectometer OTDR detection apparatus, performing, according to the modulation parameter, attenuation modulation on light that is about to enter a to-be-detected fiber link, where to-be-detected fiber links corresponding to light that is modulated each time are different; and
feeding back a modulation response to the control and communications apparatus.

With reference to the second aspect, in a first possible implementation manner of the second aspect, the performing, according to the modulation parameter, attenuation modulation on light that is about to enter a to-be-detected fiber link includes:

acquiring a power attenuation value corresponding to the to-be-detected fiber link according to the modulation parameter; and
adjusting attenuation of the light that is about to enter the to-be-detected fiber link and performing modulation according to the power attenuation value.

With reference to the second aspect or the first possible implementation manner of the second aspect, in a second possible implementation manner of the second aspect, after the acquiring a quantity N of to-be-detected fiber links and a modulation parameter that are sent by a control and communications apparatus, where N is a positive integer greater than or equal to 2, the method further includes:
separately adjusting attenuation of light that is about to enter the N to-be-detected fiber links to a minimum value, where the minimum value is a minimum attenuation value of a modulation apparatus.

According to a third aspect, an embodiment of the present invention provides an optical time domain reflectometer OTDR detection apparatus, including:

an acquiring module, configured to acquire a detection control parameter sent by a control and communications apparatus, where the detection control parameter includes a quantity N of to-be-detected fiber links, a fiber detection distance, duration, an optical pulse width, and a modulation parameter, and N is a positive integer greater than or equal to 2;

a detection module, configured to perform N times of fiber detection according to the fiber detection distance, the duration, and the optical pulse width, to acquire N total fiber curves by means of collection, where the total fiber curves include a fiber curve corresponding to light that is formed by convergence after light is separately reflected in the N to-be-detected fiber links; and for at least N-1 times of fiber detection, each time fiber detection is performed, first perform, by using a modulation apparatus according to the modulation parameter, attenuation modulation on light that is about to enter a to-be-detected fiber link, where to-be-detected fiber links corresponding to light that is modulated each time are different, and the attenuation modulation is used to modulate the light in a manner of increasing attenuation; and

a calculation module, configured to calculate by using a preset curve algorithm according to the N total fiber curves and the modulation parameter, to acquire respective fiber curves of the N to-be-detected fiber links, and feed back the fiber curves to the control and communications apparatus.

With reference to the third aspect, in a first possible implementation manner of the third aspect, N=2; and the detection module is specifically configured to perform a first time of fiber detection according to the fiber detection distance, the duration, and the optical pulse width, to acquire a first total fiber curve by means of collection; and perform, by using the modulation apparatus according to the modulation parameter, attenuation modulation on light that is about to enter one of the to-be-detected fiber links, and perform a second time of fiber detection according to the fiber detection distance, the duration, and the optical pulse width, to acquire a second total fiber curve by means of collection.

With reference to the third aspect, in a second possible implementation manner of the third aspect, N=2; and the detection module is specifically configured to perform, by using the modulation apparatus according to the modulation parameter, attenuation modulation on light that is about to enter one of the to-be-detected fiber links, and perform a first time of fiber detection according to the fiber detection distance, the duration, and the optical pulse width, to acquire a first total fiber curve by means of collection; and perform, by using the modulation apparatus according to the modulation parameter, attenuation modulation on light that is about to enter the other one of the to-be-detected fiber links, and perform a second time of fiber detection according to the fiber detection distance, the duration, and the optical pulse width, to acquire a second total fiber curve by means of collection.

With reference to the third aspect or either one of the first and the second possible implementation manners of the third aspect, in a third possible implementation manner of the fourth aspect, the apparatus further includes:

a sending module, configured to feed back a parameter acquiring response to the control and communications apparatus.

According to a fourth aspect, an embodiment of the present invention provides a modulation apparatus, including:

an acquiring module, configured to acquire a quantity N of to-be-detected fiber links and a modulation parameter that are sent by a control and communications apparatus, where N is a positive integer greater than or equal to 2;

an attenuation modulation module, configured to: for each time of at least N-1 times of fiber detection by an optical time domain reflectometer OTDR detection apparatus, perform, according to the modulation parameter, attenuation modulation on light that is about to enter a to-be-detected fiber link, where to-be-detected fiber links corresponding to light that is modulated each time are different; and

a sending module, configured to feed back a modulation response to the control and communications apparatus.

With reference to the fourth aspect, in a first possible implementation manner of the fourth aspect, the attenuation modulation module is specifically configured to acquire a power attenuation value corresponding to the to-be-detected fiber link according to the modulation parameter; and adjust attenuation of light that is about to enter the to-be-detected fiber link and perform modulation according to the power attenuation value.

With reference to the fourth aspect or the first possible implementation manner of the fourth aspect, in a second possible implementation manner of the fifth aspect, the attenuation modulation module is further configured to separately adjust attenuation of light that is about to enter the N to-be-detected fiber links to a minimum value, where the minimum value is a minimum attenuation value of the modulation apparatus.

According to the fiber measurement method and apparatus of the embodiments of the present invention, attenuation modulation is performed, in a one-by-one manner, on light that is about to enter N to-be-detected fiber links, and a fiber curve of a single to-be-detected fiber link is obtained by means of reverse calculation according to total fiber curves acquired by N times of fiber detection, so as to implement measurement of a single fiber link in multiple fiber links with relatively low costs, and reduce impact on system performance as much as possible.

## BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a schematic structural diagram of a fiber measurement system according to an embodiment of the present invention;

FIG. 2 is a flowchart of a fiber measurement method according to an embodiment of the present invention;

FIG. 3 is a flowchart of a fiber measurement method according to another embodiment of the present invention;

FIG. 4 is a flowchart of a fiber measurement method according to still another embodiment of the present invention;

FIG. 5 is a schematic structural diagram of an OTDR detection apparatus according to an embodiment of the present invention;

FIG. 6 is a schematic structural diagram of an OTDR detection apparatus according to another embodiment of the present invention;

FIG. 7 is a schematic structural diagram of a modulation apparatus according to an embodiment of the present invention;

FIG. 8 is a schematic structural diagram of a control and communications apparatus according to an embodiment of the present invention; and

FIG. 9 is a schematic structural diagram of a fiber measurement system according to another embodiment of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

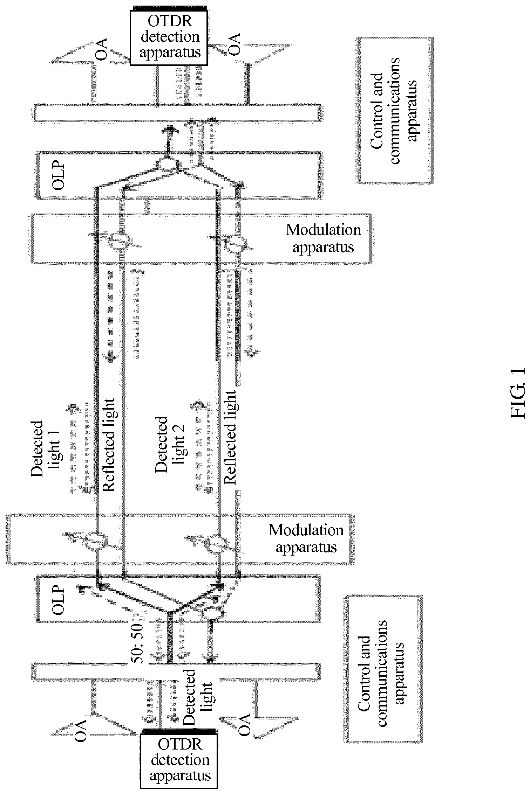

FIG. 1 is a schematic structural diagram of a fiber measurement system according to an embodiment of the present invention. As shown in FIG. 1, the system of this embodiment includes: an OTDR detection apparatus, a control and communications apparatus, a modulation apparatus, an OLP, and an optical amplifier (Optical Amplifier, OA for short). The OLP has six optical ports; a to-be-detected fiber link of a transmit channel (Tx) is divided into two parts, and two parts of a to-be-detected fiber link of a receive channel (Rx) are combined as one part. The control and communications apparatus controls an entire measurement process, and may receive input of a user, bind each port of the OTDR detection apparatus and the modulation apparatus, and send related information to the OTDR detection apparatus and the modulation apparatus; control the OTDR detection apparatus and the modulation apparatus to start and stop one time of fiber detection in order; and display a reverse calculation result of the OTDR detection apparatus. The modulation apparatus may be a VOA modulation board with costs that are currently lowest, and the apparatus has n independent optical layer interfaces, and each interface may modulate one independent to-be-detected fiber link. The OTDR detection apparatus on a left side measures light reflected in the Tx, and this is used as an example; the modulation apparatus separately performs attenuation modulation on two to-be-detected fiber links, and the OTDR detection apparatus performs two times of fiber detection, to acquire two total fiber curves, and then calculates according to a preset curve algorithm, to acquire a fiber curve of a single to-be-detected fiber link.

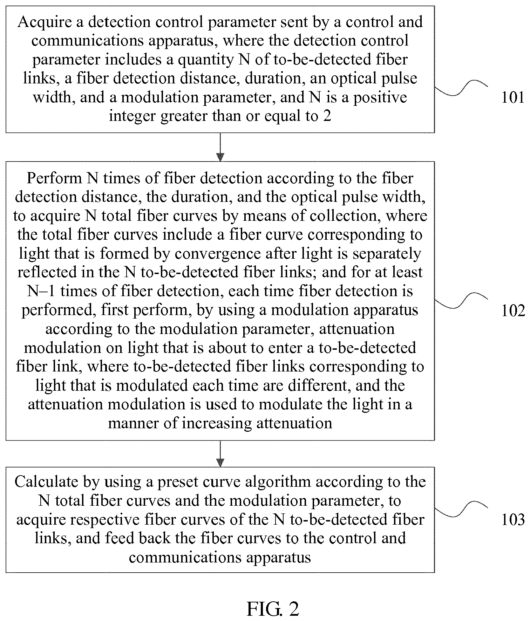

FIG. 2 is a flowchart of a fiber measurement method according to an embodiment of the present invention. As shown in FIG. 2, the method of this embodiment may include:

Step 101: Acquire a detection control parameter sent by a control and communications apparatus, where the detection control parameter includes a quantity N of to-be-detected fiber links, a fiber detection distance, duration, an optical pulse width, and a modulation parameter, and N is a positive integer greater than or equal to 2.

This embodiment may be executed by an OTDR detection apparatus. The OTDR detection apparatus may learn, according to the detection control parameter, information such as a distance to be tested in a to-be-detected fiber link, a detection duration, and a pulse width of light entering the to-be-detected fiber link, so as to collect corresponding reflected light according to this information. In the present invention, there may be two or more to-be-detected fiber links, and respective fiber curves of these to-be-detected fiber links may be acquired by using the method of this embodiment.

Step 102: Perform N times of fiber detection according to the fiber detection distance, the duration, and the optical pulse width, to acquire N total fiber curves by means of collection, where the total fiber curves include a fiber curve corresponding to light that is formed by convergence after light is separately reflected in the N to-be-detected fiber links; and for at least N-1 times of fiber detection, each time fiber detection is performed, first perform, by using a modulation apparatus according to the modulation parameter, attenuation modulation on light that is about to enter a to-be-detected fiber link, where to-be-detected fiber links corresponding to light that is modulated each time are different, and the attenuation modulation is used to modulate the light in a manner of increasing attenuation.

After being split, light separately enters the N to-be-detected fiber links, is reflected in the N to-be-detected fiber links, and is converged to form light that is received by the OTDR detection apparatus. Because the OTDR detection apparatus can acquire only total fiber curves by means of collection, to acquire the respective fiber curves of the N to-be-detected fiber links according to the total fiber curves, N times of fiber detection may be performed to acquire N total fiber curves altogether. Further, for each time of the N times of fiber detection for acquiring the N total fiber curves, the modulation apparatus performs attenuation modulation only on light that is about to enter one of the to-be-detected fiber links, and each modulation corresponds to a different fiber link. To reduce impact on system performance, the modulation apparatus may also perform, only in N-1 times of fiber detection, attenuation modulation on light that is about to enter one of the to-be-detected fiber links. The OTDR detection apparatus acquires N total fiber curves altogether by means of collection, where a first one total fiber curve is a total fiber curve Fiber_all_1 that is acquired when the modulation apparatus adjusts attenuation of the N to-be-detected fiber links to a minimum, and other N-1 total fiber curves are total fiber curves that are acquired when attenuation of light of one of the to-be-detected fiber links is increased, for example, increased by 0.5 dB each time, while attenuation of light of remaining to-be-detected fiber links remains the minimum. In this way, the N total fiber curves acquired by the OTDR detection apparatus in the N times of fiber detection are generated based on different attenuation applied to different to-be-detected fiber links.

Step 103: Calculate by using a preset curve algorithm according to the N total fiber curves and the modulation parameter, to acquire respective fiber curves of the N to-be-detected fiber links, and feed back the fiber curves to the control and communications apparatus.

The OTDR detection apparatus may calculate by using the preset curve algorithm according to an attenuation situation of the N to-be-detected fiber links and an association relationship with the total fiber curves, to acquire the respective fiber curves of the N to-be-detected fiber links. A fiber curve of a single to-be-detected fiber link is obtained by means of reverse calculation by using the preset curve algorithm combining impact of the N total fiber curves and the modulation parameter.

In this embodiment, attenuation modulation is performed, in a one-by-one manner, on light that is about to enter N to-be-detected fiber links, and a fiber curve of a single to-be-detected fiber link is obtained by means of reverse calculation according to total fiber curves acquired by means of N times of fiber detection, so as to implement measurement of a single fiber link in multiple fiber links with relatively low costs, and reduce impact on system performance as much as possible.

N=2 is used as an example to describe a specific method for implementing the foregoing step 103 of calculating by using a preset curve algorithm according to the N total fiber curves and the modulation parameter, to acquire respective fiber curves of the N to-be-detected fiber links. Measurement is performed on two to-be-detected fiber links. In a first time of fiber detection, the modulation apparatus adjusts attenuation for light that is about to enter a first to-be-detected fiber link is ATT1, and attenuation for light that is about to enter a second to-be-detected fiber link is ATT2, where ATT1 and ATT2 may be a minimum attenuation value, and the attenuation is in units of dB. The OTDR detection apparatus performs the first time of fiber detection according to the fiber detection distance, the duration, and the optical pulse width, to acquire a first total fiber curve, that is, Fiber_all_1, by means of collection, and the total fiber curve is in units of mW (mW). In a second time of fiber detection, the modulation apparatus adjusts attenuation for light that is about to enter the first to-be-detected fiber link is ATT3, and attenuation for light that is about to enter the second to-be-detected fiber link is ATT4. It is assumed that ATT1=ATT3 and ATT4=ATT2+x, that is, the modulation apparatus increases the attenuation only for the light of the second to-be-detected fiber link. The OTDR detection apparatus performs the second time of fiber detection according to the fiber detection distance, the duration, and the optical pulse width, to acquire a second total fiber curve, that is, Fiber_all_2, by means of collection. It may be learned that:

$$Fiber\_all\_1 = Fiber(1)VOA_{ATT1} + Fiber(2)VOA_{ATT2},$$

and

$$Fiber\_all\_2 = Fiber(1)VOA_{ATT3} + Fiber(2)VOA_{ATT4},$$

where $Fiber(1)VOA_{ATT1}$ represents a fiber curve of the first to-be-detected fiber link after attenuation is performed based on ATT1, Fiber(2)VOA$_{ATT2}$ represents a fiber curve of the second to-be-detected fiber link after attenuation is performed based on ATT2, and other similarities are not described herein again.

The modulation apparatus increases the attenuation x for the light of the second to-be-detected fiber link, and light enters the second to-be-detected fiber link and returns to the OTDR detection apparatus after reflection, which is equivalent to performing two times of attenuation based on x. Therefore, $Fiber(2)VOA_{ATT4} = Fiber(2)VOA_{ATT2}(mW) - 2x(dB)$, then:

$$Fiber\_all\_2 = Fiber(1)VOA_{ATT1}(mW) + Fiber(2)VOA_{ATT2}(mW) - 2x(dB),$$

and

$$Fiber\_all\_1 - Fiber\_all\_2 = Fiber(2)VOA_{ATT2} - Fiber(2)VOA_{(ATT2+X)} \quad (1).$$
$$= Fiber(2)VOA_{ATT2}(1 - 10^{-2x/10})$$

Therefore, fiber curves of the first to-be-detected fiber link and the second to-be-detected fiber link may be separately obtained as follows by means of reverse calculation:

$$Fiber(2)VOA_{ATT2} = \frac{Fiber\_all\_1 - Fiber\_all\_2}{1 - 10^{-2x/10}} \quad (2),$$

and

$$Fiber(1)VOA_{ATT1} = Fiber\_all\_1 - Fiber(2)VOA_{ATT2} \quad (3).$$

Optionally, when the OTDR detection apparatus performs two times of fiber detection, the OTDR detection apparatus may perform, by using the modulation apparatus, attenuation modulation on one of the to-be-detected fiber links in each of the two times in the foregoing example, that is, performing, by using the modulation apparatus according to the modulation parameter, attenuation modulation on light that is about to enter one of the to-be-detected fiber links, and performing a first time of fiber detection according to the fiber detection distance, the duration, and the optical pulse width, to acquire a first total fiber curve by means of collection; and performing, by using the modulation apparatus according to the modulation parameter, attenuation modulation on light that is about to enter the other one of the to-be-detected fiber links, and performing a second time of fiber detection according to the fiber detection distance, the duration, and the optical pulse width, to acquire a second total fiber curve by means of collection. The OTDR detection apparatus may further perform, by using the modulation apparatus, attenuation modulation on one of the to-be-detected fiber links only in one time of fiber detection, that is, performing a first time of fiber detection according to the fiber detection distance, the duration, and the optical pulse width, to acquire a first total fiber curve by means of collection; and performing, by using the modulation apparatus according to the modulation parameter, attenuation modulation on light that is about to enter one of the to-be-detected fiber links, and performing a second time of fiber detection according to the fiber detection distance, the duration, and the optical pulse width, to acquire a second total fiber curve by means of collection.

Optionally, when N=4, a modulation apparatus is added only to the second, the third, and the fourth to-be-detected fiber links, Fiber_all_1 is a total fiber curve that is obtained by means of detection when attenuation of light of 4 to-be-detected fiber links is all minimum attenuation, Fiber_all_2 is a total fiber curve that is obtained by means of detection when attenuation of the second to-be-detected fiber link is increased and attenuation of the first, the third, and the fourth to-be-detected fiber links is unchanged, Fiber_all_3 is a total fiber curve that is obtained by means of detection when attenuation of the third to-be-detected fiber link is increased and attenuation of the first, the second, and the fourth to-be-detected fiber links is unchanged, and Fiber_all_4 is a total fiber curve that is obtained by means of detection when attenuation of the fourth to-be-detected fiber link is increased and attenuation of the first, the second, and the third to-be-detected fiber links is unchanged. Referring to formula (1) in which N=2, the following result may be obtained:

Fiber(2)VOA$_{ATT2}$ is calculated from $Fiber\_all\_1 - Fiber\_all\_2$,
Fiber(3)VOA$_{ATT3}$ is calculated from $Fiber\_all\_1 - Fiber\_all\_3$,

Fiber(4)VOA$_{ATT4}$ is calculated from *Fiber_all_*1-*Fiber_all_*4, and finally the following is calculated:

$$Fiber(1)VOA_{ATT1} = Fiber\_all\_1 - (Fiber(2)VOA_{ATT2} + Fiber(3)VOA_{ATT3} + Fiber(4)VOA_{ATT4}).$$

By analogy, a fiber curve of a single to-be-detected fiber link may be calculated when N is any value.

Further, after the foregoing step 101, the method further includes: feeding back a parameter acquiring response to the control and communications apparatus.

Further, after the foregoing step 102, the method further includes: feeding back a collection success identifier to the control and communications apparatus.

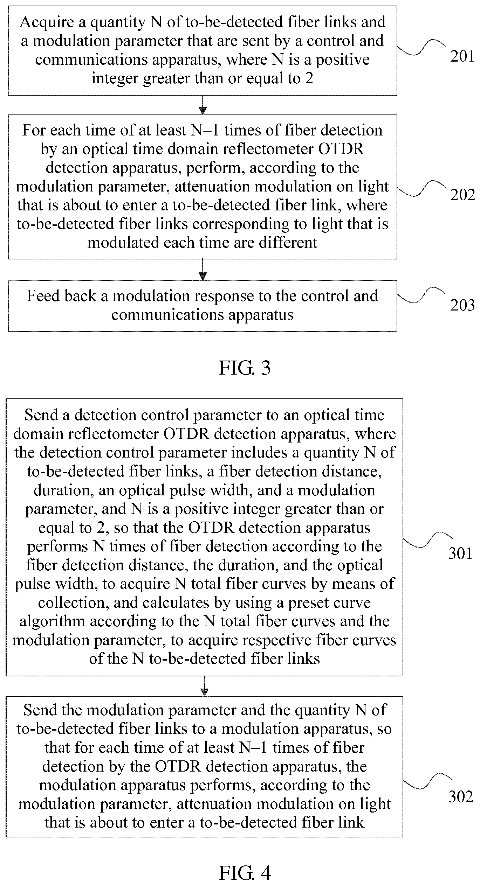

FIG. 3 is a flowchart of a fiber measurement method according to another embodiment of the present invention. As shown in FIG. 3, the method of this embodiment may include:

Step 201: Acquire a quantity N of to-be-detected fiber links and a modulation parameter that are sent by a control and communications apparatus, where N is a positive integer greater than or equal to 2.

This embodiment may be executed by a modulation apparatus. This embodiment corresponds to the method embodiment shown in FIG. 2, implementation principles and technical effects thereof are similar, and details are not described herein again.

Step 202: For each time of at least N-1 times of fiber detection by an optical time domain reflectometer OTDR detection apparatus, perform, according to the modulation parameter, attenuation modulation on light that is about to enter a to-be-detected fiber link, where to-be-detected fiber links corresponding to light that is modulated each time are different;

Step 203: Feed back a modulation response to the control and communications apparatus.

In this embodiment, attenuation modulation is performed, in a one-by-one manner, on light that is about to enter N to-be-detected fiber links, and a fiber curve of a single to-be-detected fiber link is obtained by means of reverse calculation according to total fiber curves acquired by N times of fiber detection, so as to implement measurement of a single fiber link in multiple fiber links with relatively low costs, and reduce impact on system performance as much as possible.

Further, a specific method for implementing the foregoing step 201 of performing, according to the modulation parameter, attenuation modulation on light that is about to enter a to-be-detected fiber link may be: acquiring a power attenuation value corresponding to the to-be-detected fiber link according to the modulation parameter; and adjusting attenuation of the light that is about to enter the to-be-detected fiber link and performing modulation according to the power attenuation value.

The modulation apparatus may adjust an attenuation value of light that is about to enter a to-be-detected fiber link, to perform attenuation modulation on the light.

Further, after the foregoing step 201, the method further includes: separately adjusting attenuation of light that is about to enter the N to-be-detected fiber links to a minimum value, where the minimum value is a minimum attenuation value of the modulation apparatus.

In an initial state, the modulation apparatus adjusts attenuation corresponding to each to-be-detected fiber link to a minimum, so that each to-be-detected fiber link is in a state of minimum insertion loss, thereby reducing impact on system performance.

FIG. 4 is a flowchart of a fiber measurement method according to still another embodiment of the present invention. As shown in FIG. 4, the method of this embodiment may include:

Step 301: Send a detection control parameter to an optical time domain reflectometer OTDR detection apparatus, where the detection control parameter includes a quantity N of to-be-detected fiber links, a fiber detection distance, duration, an optical pulse width, and a modulation parameter, and N is a positive integer greater than or equal to 2, so that the OTDR detection apparatus performs N times of fiber detection according to the fiber detection distance, the duration, and the optical pulse width, to acquire N total fiber curves by means of collection, and calculates by using a preset curve algorithm according to the N total fiber curves and the modulation parameter, to acquire respective fiber curves of the N to-be-detected fiber links.

This embodiment may be executed by a control and communications apparatus. This embodiment corresponds to the method embodiment shown in FIG. 2, implementation principles and technical effects thereof are similar, and details are not described herein again.

Step 302: Send the modulation parameter and the quantity N of to-be-detected fiber links to a modulation apparatus, so that for each time of at least N-1 times of fiber detection by the OTDR detection apparatus, the modulation apparatus performs, according to the modulation parameter, attenuation modulation on light that is about to enter a to-be-detected fiber link.

In this embodiment, attenuation modulation is performed, in a one-by-one manner, on light that is about to enter N to-be-detected fiber links, and a fiber curve of a single to-be-detected fiber link is obtained by means of reverse calculation according to total fiber curves acquired by N times of fiber detection, so as to implement measurement of a single fiber link in multiple fiber links with relatively low costs, and reduce impact on system performance as much as possible.

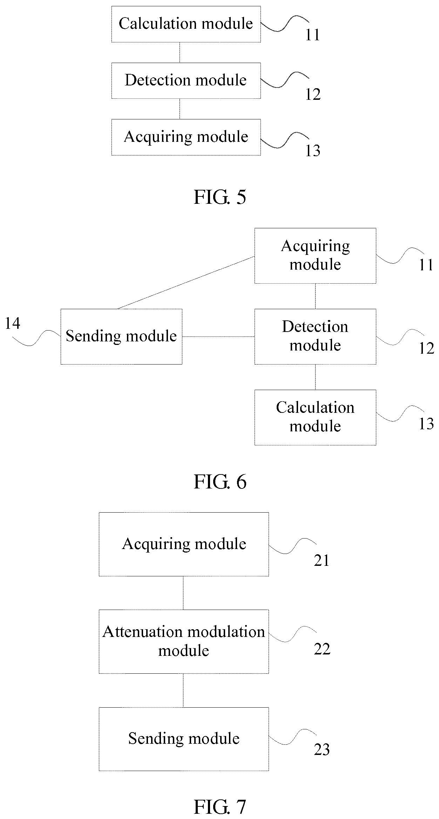

FIG. 5 is a schematic structural diagram of an OTDR detection apparatus according to an embodiment of the present invention. As shown in FIG. 5, the apparatus of this embodiment may include: an acquiring module 11, a detection module 12, and a calculation module 13, where the acquiring module 11 is configured to acquire a detection control parameter sent by a control and communications apparatus, where the detection control parameter includes a quantity N of to-be-detected fiber links, a fiber detection distance, duration, an optical pulse width, and a modulation parameter, and N is a positive integer greater than or equal to 2; the detection module 12 is configured to perform N times of fiber detection according to the fiber detection distance, the duration, and the optical pulse width, to acquire N total fiber curves by means of collection, where the total fiber curves include a fiber curve corresponding to light that is formed by convergence after light is separately reflected in the N to-be-detected fiber links; and for at least N-1 times of fiber detection, each time fiber detection is performed, first perform, by using a modulation apparatus according to the modulation parameter, attenuation modulation on light that is about to enter a to-be-detected fiber link, where to-be-detected fiber links corresponding to light that is modulated each time are different, and the attenuation modulation is used to modulate the light in a manner of increasing attenuation; and the calculation module 13 is configured to calculate by using a preset curve algorithm according to the N total fiber curves and the modulation parameter, to acquire respective fiber curves of the N to-be-detected fiber links, and feed back the fiber curves to the control and communications apparatus.

The apparatus of this embodiment may be configured to execute the technical solution of the method embodiment shown in FIG. 2, implementation principles and technical effects thereof are similar, and details are not described herein again.

Further, N=2; and the detection module 12 is specifically configured to perform a first time of fiber detection according to the fiber detection distance, the duration, and the optical pulse width, to acquire a first total fiber curve by means of collection; and perform, by using the modulation apparatus according to the modulation parameter, attenuation modulation on light that is about to enter one of the to-be-detected fiber links, and perform a second time of fiber detection according to the fiber detection distance, the duration, and the optical pulse width, to acquire a second total fiber curve by means of collection.

Further, N=2; and the detection module 12 is specifically configured to perform, by using the modulation apparatus according to the modulation parameter, attenuation modulation on light that is about to enter one of the to-be-detected fiber links, and perform a first time of fiber detection according to the fiber detection distance, the duration, and the optical pulse width, to acquire a first total fiber curve by means of collection; and perform, by using the modulation apparatus according to the modulation parameter, attenuation modulation on light that is about to enter the other one of the to-be-detected fiber links, and perform a second time of fiber detection according to the fiber detection distance, the duration, and the optical pulse width, to acquire a second total fiber curve by means of collection.

FIG. 6 is a schematic structural diagram of an OTDR detection apparatus according to another embodiment of the present invention. As shown in FIG. 6, based on a structure of the apparatus shown in FIG. 5, the apparatus of this embodiment may further include: a sending module 14, where the sending module 14 is configured to feed back a parameter acquiring response to the control and communications apparatus; and is further configured to feed back a collection success identifier to the control and communications apparatus.

The apparatus of this embodiment may be configured to execute the technical solution of the method embodiment shown in FIG. 2, implementation principles and technical effects thereof are similar, and details are not described herein again.

FIG. 7 is a schematic structural diagram of a modulation apparatus according to an embodiment of the present invention. As shown in FIG. 7, the apparatus of this embodiment may include: an acquiring module 21, an attenuation modulation module 22, and a sending module 23, where the acquiring module 21 is configured to acquire a quantity N of to-be-detected fiber links and a modulation parameter that are sent by a control and communications apparatus, where N is a positive integer greater than or equal to 2; the attenuation modulation module 22 is configured to: for each time of at least N-1 times of fiber detection by an optical time domain reflectometer OTDR detection apparatus, perform, according to the modulation parameter, attenuation modulation on light that is about to enter a to-be-detected fiber link, where to-be-detected fiber links corresponding to light that is modulated each time are different; and the sending module 23 is configured to feed back a modulation response to the control and communications apparatus.

The apparatus of this embodiment may be configured to execute the technical solution of the method embodiment shown in FIG. 3, implementation principles and technical effects thereof are similar, and details are not described herein again.

Further, the attenuation modulation module 22 is specifically configured to acquire a power attenuation value corresponding to the to-be-detected fiber link according to the modulation parameter; and adjust attenuation of the light that is about to enter the to-be-detected fiber link and perform modulation according to the power attenuation value.

Further, the attenuation modulation module 22 is further configured to separately adjust attenuation of light that is about to enter the N to-be-detected fiber links to a minimum value, where the minimum value is a minimum attenuation value of the modulation apparatus.

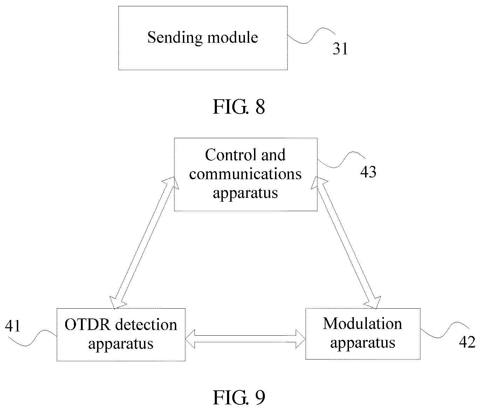

FIG. 8 is a schematic structural diagram of a control and communications apparatus according to an embodiment of the present invention. As shown in FIG. 8, the apparatus of this embodiment may include: a sending module 31, where the sending module 31 is configured to send a detection control parameter to an optical time domain reflectometer OTDR detection apparatus, where the detection control parameter includes a quantity N of to-be-detected fiber links, a fiber detection distance, duration, an optical pulse width, and a modulation parameter, and N is a positive integer greater than or equal to 2, so that the OTDR detection apparatus performs N times of fiber detection according to the fiber detection distance, the duration, and the optical pulse width, to acquire N total fiber curves by means of collection, and calculates by using a preset curve algorithm according to the N total fiber curves and the modulation parameter, to acquire respective fiber curves of the N to-be-detected fiber links; and send the modulation parameter and the quantity N of to-be-detected fiber links to a modulation apparatus, so that for each time of at least N-1 times of fiber detection by the OTDR detection apparatus, the modulation apparatus performs, according to the modulation parameter, attenuation modulation on light that is about to enter a to-be-detected fiber link.

The apparatus of this embodiment may be configured to execute the technical solution of the method embodiment shown in FIG. 4, implementation principles and technical effects thereof are similar, and details are not described herein again.

FIG. 9 is a schematic structural diagram of a fiber measurement system according to another embodiment of the present invention. As shown in FIG. 9, the system of this embodiment includes: an OTDR detection apparatus 41, a modulation apparatus 42, and a control and communications apparatus 43. The OTDR detection apparatus 41 may be in a structure of the apparatus embodiment shown in FIG. 5 or FIG. 6; and correspondingly, the OTDR detection apparatus 41 may execute the technical solution of the method embodiment shown in FIG. 2, implementation principles and technical effects thereof are similar, and details are not described herein again. The modulation apparatus 42 may be in a structure of the apparatus embodiment shown in FIG. 7; and correspondingly, the modulation apparatus 42 may execute the technical solution of the method embodiment shown in FIG. 3, implementation principles and technical effects thereof are similar, and details are not described herein again. The control and communications apparatus 43 may be in a structure of the apparatus embodiment shown in FIG. 8; and correspondingly, the control and communications apparatus 43 may execute the technical solution of the method embodiment shown in FIG. 4, implementation principles and technical effects thereof are similar, and details are not described herein again.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor (processor) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1.  A fiber measurement method, the method being performed by an optical time domain reflectometer, OTDR, and comprising:

    acquiring (101) a detection control parameter sent by a control and communications apparatus, wherein the detection control parameter comprises a quantity N of to-be-detected fiber links, a fiber detection distance, duration, an optical pulse width, and a modulation parameter, and N is a positive integer greater than or equal to 2;
    performing (102) N times of fiber detection according to the fiber detection distance, the duration, and the optical pulse width, to acquire N total fiber curves by means of collection, wherein the total fiber curves comprise a fiber curve corresponding to light that is formed by convergence after light is separately reflected in the N to-be-detected fiber links; and for at least N-1 times of fiber detection, each time fiber detection is performed, first performing, by using a modulation apparatus according to the modulation parameter, attenuation modulation on light that is about to enter a to-be-detected fiber link, wherein to-be-detected fiber links corresponding to light that is modulated each time are different, and the attenuation modulation is used to modulate the light in a manner of increasing attenuation; and
    calculating (103) by using a preset curve algorithm according to the N total fiber curves and the modulation parameter, to acquire respective fiber curves of the N to-be-detected fiber links, and feeding back the fiber curves to the control and communications apparatus.

2.  The method according to claim 1, wherein N=2; and
    the performing (102) N times of fiber detection according to the fiber detection distance, the duration, and the optical pulse width, to acquire N total fiber curves by means of collection comprises:

    performing a first time of fiber detection according to the fiber detection distance, the duration, and the optical pulse width, to acquire a first total fiber curve by means of collection; and
    performing, by using the modulation apparatus according to the modulation parameter, attenuation modulation on light that is about to enter one of the to-be-detected fiber links, and performing a second time of fiber detection according to the fiber detection distance, the duration, and the optical pulse width, to acquire a second total fiber curve by means of collection.

3.  The method according to claim 1, wherein N=2; and
    the performing (102) N times of fiber detection according to the fiber detection distance, the duration, and the optical pulse width, to acquire N total fiber curves by means of collection comprises:

    performing, by using the modulation apparatus according to the modulation parameter, attenuation modulation on light that is about to enter one of the to-be-detected fiber links, and performing a first time of fiber detection according to the fiber detection distance, the duration, and the optical pulse width, to acquire a first total fiber curve by means of collection; and
    performing, by using the modulation apparatus according to the modulation parameter, attenuation modulation on light that is about to enter the other one of the to-be-detected fiber links, and performing a second time of fiber detection according to the fiber detection distance, the duration, and the optical pulse width, to acquire a second total fiber curve by means of collection.

4.  The method according to any one of claims 1 to 3, after the acquiring a detection control parameter sent by a control and communications apparatus, further comprising:
    feeding back a parameter acquiring response to the control and communications apparatus.

5. A fiber measurement method, the method being performed by a modulation apparatus and comprising:

    acquiring (201) a quantity N of to-be-detected fiber links and a modulation parameter that are sent by a control and communications apparatus, wherein N is a positive integer greater than or equal to 2;
    for each time of at least N-1 times of fiber detection by an optical time domain reflectometer, OTDR, detection apparatus, performing (202), according to the modulation parameter, attenuation modulation on light that is about to enter a to-be-detected fiber link, wherein to-be-detected fiber links corresponding to light that is modulated each time are different; and
    feeding back (203) a modulation response to the control and communications apparatus.

6. The method according to claim 5, wherein the performing (202), according to the modulation parameter, attenuation modulation on light that is about to enter a to-be-detected fiber link comprises:

    acquiring a power attenuation value corresponding to the to-be-detected fiber link according to the modulation parameter; and
    adjusting attenuation of the light that is about to enter the to-be-detected fiber link and performing modulation according to the power attenuation value.

7. The method according to claim 5 or 6, after the acquiring a quantity N of to-be-detected fiber links and a modulation parameter that are sent by a control and communications apparatus, wherein N is a positive integer greater than or equal to 2, further comprising:
    separately adjusting attenuation of light that is about to enter the N to-be-detected fiber links to a minimum value, wherein the minimum value is a minimum attenuation value of a modulation apparatus.

8. An optical time domain reflectometer, OTDR, detection apparatus, comprising:

    an acquiring module (13), configured to acquire a detection control parameter sent by a control and communications apparatus, wherein the detection control parameter comprises a quantity N of to-be-detected fiber links, a fiber detection distance, duration, an optical pulse width, and a modulation parameter, and N is a positive integer greater than or equal to 2;
    a detection module (12), configured to perform N times of fiber detection according to the fiber detection distance, the duration, and the optical pulse width, to acquire N total fiber curves by means of collection, wherein the total fiber curves comprise a fiber curve corresponding to light that is formed by convergence after light is separately reflected in the N to-be-detected fiber links; and for at least N-1 times of fiber detection, each time fiber detection is performed, first perform, by using a modulation apparatus according to the modulation parameter, attenuation modulation on light that is about to enter a to-be-detected fiber link, wherein to-be-detected fiber links corresponding to light that is modulated each time are different, and the attenuation modulation is used to modulate the light in a manner of increasing attenuation; and
    a calculation module (11), configured to calculate by using a preset curve algorithm according to the N total fiber curves and the modulation parameter, to acquire respective fiber curves of the N to-be-detected fiber links, and feed back the fiber curves to the control and communications apparatus.

9. The apparatus according to claim 8, wherein N=2; and
    the detection module (12) is specifically configured to perform a first time of fiber detection according to the fiber detection distance, the duration, and the optical pulse width, to acquire a first total fiber curve by means of collection; and perform, by using the modulation apparatus according to the modulation parameter, attenuation modulation on light that is about to enter one of the to-be-detected fiber links, and perform a second time of fiber detection according to the fiber detection distance, the duration, and the optical pulse width, to acquire a second total fiber curve by means of collection.

10. The apparatus according to claim 8, wherein N=2; and
    the detection module (12) is specifically configured to perform, by using the modulation apparatus according to the modulation parameter, attenuation modulation on light that is about to enter one of the to-be-detected fiber links, and perform a first time of fiber detection according to the fiber detection distance, the duration, and the optical pulse width, to acquire a first total fiber curve by means of collection; and perform, by using the modulation apparatus according to the modulation parameter, attenuation modulation on light that is about to enter the other one of the to-be-detected fiber links, and perform a second time of fiber detection according to the fiber detection distance, the duration, and the optical pulse width, to acquire a second total fiber curve by means of collection.

**11.** The apparatus according to any one of claims 8 to 10, further comprising:
a sending module (14), configured to feed back a parameter acquiring response to the control and communications apparatus.

**12.** The apparatus according to any one of claims 8 to 11, wherein the sending module (14) is further configured to feed back a collection success identifier to the control and communications apparatus.

**13.** A modulation apparatus, comprising:

an acquiring module (21), configured to acquire a quantity N of to-be-detected fiber links and a modulation parameter that are sent by a control and communications apparatus, wherein N is a positive integer greater than or equal to 2;
an attenuation modulation module (22), configured to: for each time of at least N-1 times of fiber detection by an optical time domain reflectometer, OTDR, detection apparatus, perform, according to the modulation parameter, attenuation modulation on light that is about to enter a to-be-detected fiber link, wherein to-be-detected fiber links corresponding to light that is modulated each time are different; and
a sending module (23), configured to feed back a modulation response to the control and communications apparatus.

**14.** The apparatus according to claim 13, wherein the attenuation modulation module (22) is specifically configured to acquire a power attenuation value corresponding to the to-be-detected fiber link according to the modulation parameter; and adjust attenuation of the light that is about to enter the to-be-detected fiber link and perform modulation according to the power attenuation value.

**15.** The apparatus according to claim 13 or 14, wherein the attenuation modulation module (22) is further configured to separately adjust attenuation of light that is about to enter the N to-be-detected fiber links to a minimum value, wherein the minimum value is a minimum attenuation value of the modulation apparatus.

**Patentansprüche**

**1.** Fasermessverfahren, wobei das Verfahren durch ein optisches Zeitbereichsreflektometer, OTDR, durchgeführt wird und umfasst:

Erfassen (101) eines Detektionssteuerungsparameters, der durch eine Steuerungs- und Kommunikationsvorrichtung gesendet wird, wobei der Detektionssteuerungsparameter eine Menge N an zu detektierenden Faserverbindungen, eine Faserdetektionsdistanz, eine Dauer, eine Optikimpulsbreite und einen Modulationsparameter umfasst, und N eine positive Ganzzahl größer als oder gleich 2 ist;
Durchführen (102) von N Malen einer Faserdetektion gemäß der Faserdetektionsdistanz, der Dauer und der Optikimpulsbreite, um N Gesamtfaserkurven mithilfe von Sammlung zu erfassen, wobei die Gesamtfaserkurven eine Faserkurve umfassen, die Licht entspricht, das durch Konvergenz gebildet wird, nachdem das Licht in den N zu detektierenden Faserverbindungen separat reflektiert wurde; und wobei für wenigstens N-1 Male Faserdetektion jedes Mal eine Faserdetektion durchgeführt wird, wobei zuerst unter Verwendung einer Modulationsvorrichtung gemäß dem Modulationsparameter eine Abschwächungsmodulation mit Licht durchgeführt wird, das dabei ist, in eine zu detektierende Faserverbindung einzutreten, wobei zu detektierende Faserverbindungen, die Licht entsprechen, das moduliert wird, jedes Mal unterschiedlich sind, und wobei die Abschwächungsmodulation verwendet wird, um das Licht in einer Weise zunehmender Abschwächung zu modulieren; und
Berechnen (103), unter Verwendung eines voreingestellten Kurvenalgorithmus gemäß den N Gesamtfaserkurven und dem Modulationsparameter, um jeweilige Faserkurven der N zu detektierenden Faserverbindungen zu erfassen, und Rückkoppeln der Faserkurven zu der Steuerungs- und Kommunikationsvorrichtung.

**2.** Verfahren nach Anspruch 1, wobei N=2; und
wobei das Durchführen (102) von N Malen einer Faserdetektion gemäß der Faserdetektionsdistanz, der Dauer und der Optikimpulsbreite zum Erfassen von N Gesamtfaserkurven mithilfe von Sammlung umfasst:

Durchführen eines ersten Mals einer Faserdetektion gemäß der Faserdetektionsdistanz, der Dauer und der Optikimpulsbreite, um eine erste Gesamtfaserkurve mithilfe von Sammlung zu erfassen; und
Durchführen, unter Verwendung der Modulationsvorrichtung gemäß dem Modulationsparameter, einer Abschwächungsmodulation mit Licht, das dabei ist, in eine der zu detektierenden Faserverbindungen einzutreten, und Durchführen eines zweiten Mals einer Faserdetektion gemäß der Faserdetektionsdistanz, der Dauer und der Optikimpulsbreite, um eine zweite Gesamtfaserkurve mithilfe von Sammlung zu erfassen.

3. Verfahren nach Anspruch 1, wobei N=2; und
wobei das Durchführen (102) von N Malen einer Faserdetektion gemäß der Faserdetektionsdistanz, der Dauer und der Optikimpulsbreite zum Erfassen von N Gesamtfaserkurven mithilfe von Sammlung umfasst:

Durchführen, unter Verwendung der Modulationsvorrichtung gemäß dem Modulationsparameter, einer Abschwächungsmodulation mit Licht, das dabei ist, in eine der zu detektierenden Faserverbindungen einzutreten, und Durchführen eines ersten Mals einer Faserdetektion gemäß der Faserdetektionsdistanz, der Dauer und der Optikimpulsbreite, um eine erste Gesamtfaserkurve mithilfe von Sammlung zu erfassen; und
Durchführen, unter Verwendung der Modulationsvorrichtung gemäß dem Modulationsparameter, einer Abschwächungsmodulation mit Licht, das dabei ist, in die andere der zu detektierenden Faserverbindungen einzutreten, und Durchführen eines zweiten Mals einer Faserdetektion gemäß der Faserdetektionsdistanz, der Dauer und der Optikimpulsbreite, um eine zweite Gesamtfaserkurve mithilfe von Sammlung zu erfassen.

4. Verfahren nach einem der Ansprüche 1 bis 3, nach dem Erfassen eines Detektionssteuerungsparameters, der durch eine Steuerungs- und Kommunikationsvorrichtung gesendet wird, ferner umfassend:
Rückkoppeln einer Parametererfassungsantwort zu der Steuerungs- und Kommunikationsvorrichtung.

5. Fasermessverfahren, wobei das Verfahren durch eine Modulationsvorrichtung durchgeführt wird und umfasst:

Erfassen (201) einer Menge N von zu detektierenden Faserverbindungen und eines Modulationsparameters, die durch eine Steuerungs- und Kommunikationsvorrichtung gesendet werden, wobei N eine positive Ganzzahl größer als oder gleich 2 ist;
für jedes Mal der wenigstens N-1 Male einer Faserdetektion durch eine optische Zeitbereichsreflektometer-OTDR-Detektionsvorrichtung Durchführen (202), gemäß dem Modulationsparameter, einer Abschwächungsmodulation mit Licht, das dabei ist, in eine zu detektierende Faserverbindung einzutreten, wobei die zu detektierenden Faserverbindungen, die Licht entsprechen, das moduliert wird, jedes Mal unterschiedlich sind; und
Rückkoppeln (203) einer Modulationsantwort zu der Steuerungs- und Kommunikationsvorrichtung.

6. Verfahren nach Anspruch 5, wobei das Durchführen (202), gemäß dem Modulationsparameter, einer Abschwächungsmodulation mit Licht, das dabei ist, in eine zu detektierende Faserverbindung einzutreten, umfasst:

Erfassen eines Leistungsabschwächungswerts, welcher der zu detektierenden Faserverbindung entspricht, gemäß dem Modulationsparameter; und
Einstellen der Abschwächung des Lichts, das dabei ist, in die zu detektierende Faserverbindung einzutreten, und Durchführen einer Modulation gemäß dem Leistungsabschwächungswert.

7. Verfahren nach Anspruch 5 oder 6, nach dem Erfassen einer Menge N von zu detektierenden Faserverbindungen und eines Modulationsparameters, die durch eine Steuerungs- und Kommunikationsvorrichtung gesendet werden, wobei N eine positive Ganzzahl größer als oder gleich 2 ist, ferner umfassend:
separates Einstellen der Abschwächung von Licht, das dabei ist, in die N zu detektierenden Faserverbindungen einzutreten, auf einen Mindestwert, wobei der Mindestwert ein Mindestabschwächungswert einer Modulationsvorrichtung ist.

8. Optische Zeitbereichsreflektometer-OTDR-Detektionsvorrichtung, umfassend:

ein Erfassungsmodul (13), das dafür ausgelegt ist, einen Detektionssteuerungsparameter zu erfassen, der durch eine Steuerungs- und Kommunikationsvorrichtung gesendet wird, wobei der Detektionssteuerungsparameter eine Menge N von zu detektierenden Faserverbindungen, eine Faserdetektionsdistanz, eine Dauer, eine Optikimpulsbreite und einen Modulationsparameter umfasst, und wobei N eine positive Ganzzahl größer als oder gleich 2 ist;
ein Detektionsmodul (12), das dafür ausgelegt ist, N Male eine Faserdetektion gemäß der Faserdetektionsdistanz, der Dauer und der Optikimpulsbreite durchzuführen, um N Gesamtfaserkurven mithilfe von Sammlung zu erfassen, wobei die Gesamtfaserkurven eine Faserkurve umfassen, die Licht entspricht, das durch Konvergenz gebildet wird, nachdem das Licht in den N zu detektierenden Faserverbindungen separat reflektiert wurde; und für wenigstens N-1 Male einer Faserdetektion jedes Mal eine Faserdetektion durchgeführt wird, wobei zuerst unter Verwendung einer Modulationsvorrichtung gemäß dem Modulationsparameter eine Abschwächungsmodulation mit Licht durchgeführt wird, das dabei ist, in eine zu detektierende Faserverbindung einzutreten, wobei die zu detektierenden Faserverbindungen, die Licht entsprechen, das moduliert wird, jedes Mal unterschiedlich sind, und wobei die Abschwächungsmodulation verwendet wird, um das Licht in einer Weise zunehmender Abschwächung zu modulieren; und

ein Berechnungsmodul (11), das dafür ausgelegt ist, unter Verwendung eines voreingestellten Kurvenalgorithmus gemäß den N Gesamtfaserkurven und dem Modulationsparameter zu berechnen, um jeweilige Faserkurven der N zu detektierenden Faserverbindungen zu erfassen und die Faserkurven zu der Steuerungs- und Kommunikationsvorrichtung rückzukoppeln.

9. Vorrichtung nach Anspruch 8, wobei N=2; und

wobei das Detektionsmodul (12) spezifisch dafür ausgelegt ist, ein erstes Mal eine Faserdetektion gemäß der Faserdetektionsdistanz, der Dauer und der Optikimpulsbreite durchzuführen, um eine erste Gesamtfaserkurve mithilfe von Sammlung zu erfassen; und unter Verwendung der Modulationsvorrichtung gemäß dem Modulationsparameter eine Abschwächungsmodulation mit Licht durchzuführen, das dabei ist, in eine der zu detektierenden Faserverbindungen einzutreten, und ein zweites Mal eine Faserdetektion gemäß der Faserdetektionsdistanz, der Dauer und der Optikimpulsbreite durchzuführen, um eine zweite Gesamtfaserkurve mithilfe von Sammlung zu erfassen.

10. Vorrichtung nach Anspruch 8, wobei N=2; und

wobei das Detektionsmodul (12) spezifisch dafür ausgelegt ist, unter Verwendung der Modulationsvorrichtung gemäß dem Modulationsparameter eine Abschwächungsmodulation mit Licht durchzuführen, das dabei ist, in eine der zu detektierenden Faserverbindungen einzutreten, und ein erstes Mal eine Faserdetektion gemäß der Faserdetektionsdistanz, der Dauer und der Optikimpulsbreite durchzuführen, um eine erste Gesamtfaserkurve mithilfe von Sammlung zu erfassen; und unter Verwendung der Modulationsvorrichtung gemäß dem Modulationsparameter eine Abschwächungsmodulation mit Licht durchzuführen, das dabei ist, in die andere der zu detektierenden Faserverbindungen einzutreten, und ein zweites Mal eine Faserdetektion gemäß der Faserdetektionsdistanz, der Dauer und der Optikimpulsbreite durchzuführen, um eine zweite Gesamtfaserkurve mithilfe von Sammlung zu erfassen.

11. Vorrichtung nach einem der Ansprüche 8 bis 10, ferner umfassend:

ein Sendemodul (14), das dafür ausgelegt ist, eine Parametererfassungsantwort zu der Steuerungs- und Kommunikationsvorrichtung rückzukoppeln.

12. Vorrichtung nach einem der Ansprüche 8 bis 11, wobei das Sendemodul (14) ferner dafür ausgelegt ist, einen Sammlungserfolgsidentifikator zu der Steuerungs- und Kommunikationsvorrichtung rückzukoppeln.

13. Modulationsvorrichtung, umfassend:

ein Erfassungsmodul (21), das dafür ausgelegt ist, eine Menge N von zu detektierenden Faserverbindungen und einen Modulationsparameter zu erfassen, die durch eine Steuerungs- und Kommunikationsvorrichtung gesendet werden, wobei N eine positive Ganzzahl größer als oder gleich 2 ist;

ein Abschwächungsmodulationsmodul (22), das dafür ausgelegt ist: für jedes Mal der wenigstens N-1 Male einer Faserdetektion durch eine optische Zeitbereichsreflektometer-OTDR-Detektionsvorrichtung gemäß dem Modulationsparameter eine Abschwächungsmodulation mit Licht durchzuführen, das dabei ist, in eine zu detektierende Faserverbindung einzutreten, wobei die zu detektierenden Faserverbindungen, die Licht entsprechen, das moduliert wird, jedes Mal unterschiedlich sind; und

ein Sendemodul (23), das dafür ausgelegt ist, eine Modulationsantwort zu der Steuerungs- und Kommunikationsvorrichtung rückzukoppeln.

14. Vorrichtung nach Anspruch 13, wobei das Abschwächungsmodulationsmodul (22) spezifisch dafür ausgelegt ist, gemäß dem Modulationsparameter einen Leistungsabschwächungswert zu erfassen, welcher der zu detektierenden Faserverbindung entspricht; und die Abschwächung des Lichts, das dabei ist, in die zu detektierende Faserverbindung einzutreten, einzustellen, und eine Modulation gemäß dem Leistungsabschwächungswert durchzuführen.

15. Vorrichtung nach Anspruch 13 oder 14, wobei das Abschwächungsmodulationsmodul (22) ferner dafür ausgelegt ist, die Abschwächung von Licht, das dabei ist, in die N zu detektierenden Faserverbindungen einzutreten, separat auf einen Mindestwert einzustellen, wobei der Mindestwert ein Mindestabschwächungswert der Modulationsvorrichtung ist.

**Revendications**

1. Procédé de mesure de fibres, le procédé étant exécuté par un réflectomètre optique à domaine temporel, OTDR (optical time domain reflectometer), et comprenant :

l'acquisition (101) d'un paramètre de commande de détection envoyé par un appareil de commande et de communication, dans lequel le paramètre de commande de détection comprend une quantité N de liaisons par fibres à détecter, une distance de détection de fibres, une durée, une largeur d'impulsion optique et un paramètre de modulation, et N est un entier positif supérieur ou égal à 2 ;
l'exécution (102) par N fois de la détection de fibres en fonction de la distance de détection de fibres, de la durée et de la largeur d'impulsion optique, pour acquérir N courbes de fibres totales au moyen d'une collecte, dans lequel les courbes de fibres totales comprennent une courbe de fibres correspondant à la lumière formée par convergence une fois que la lumière est réfléchie séparément dans les N liaisons par fibres à détecter ; et pendant au moins N-1 fois que la détection de fibres a lieu, chaque fois qu'une détection de fibres est effectuée, la réalisation, pour la première fois, en utilisant un appareil de modulation conforme au paramètre de modulation, d'une modulation d'atténuation de la lumière sur le point d'entrer dans une liaison par fibres à détecter, dans lequel les liaisons par fibres à détecter, correspondant à la lumière modulée sont chaque fois différentes, et la modulation d'atténuation est utilisée pour moduler la lumière de manière à augmenter l'atténuation ; et le calcul (103) en utilisant un algorithme de courbe prédéfini selon les N courbes de fibres totales et le paramètre de modulation, pour acquérir les courbes de fibres respectives des N liaisons par fibres à détecter, et renvoyer les courbes de fibres à l'appareil de commande et de communication.

2. Procédé selon la revendication 1, dans lequel N=2 ; et
l'exécution (102) par N fois de la détection de fibres en fonction de la distance de détection de fibres, de la durée et de la largeur d'impulsion optique, pour acquérir N courbes de fibres totales au moyen d'une collecte, comprend :

l'exécution, une première fois, de la détection de fibres en fonction de la distance de détection de fibres, de la durée et de la largeur d'impulsion optique, pour acquérir une première courbe de fibres totales au moyen d'une collecte ; et
l'exécution, en utilisant l'appareil de modulation en fonction du paramètre de modulation, d'une modulation d'atténuation sur la lumière sur le point d'entrer dans l'une des liaisons par fibres à détecter, et l'exécution, une seconde fois, de la détection de fibres en fonction de la distance de détection de fibres, de la durée et de la largeur d'impulsion optique, pour acquérir une seconde courbe de fibres totales au moyen d'une collecte.

3. Procédé selon la revendication 1, dans lequel N=2 ; et
l'exécution (102) par N fois de la détection de fibres en fonction de la distance de détection de fibres, de la durée et de la largeur d'impulsion optique, pour acquérir N courbes de fibres totales au moyen d'une collecte, comprend :

l'exécution, en utilisant l'appareil de modulation en fonction du paramètre de modulation, d'une modulation d'atténuation sur la lumière sur le point d'entrer dans l'une des liaisons par fibres à détecter, et l'exécution, une première fois, de la détection des fibres en fonction de la distance de détection de fibres, de la durée et de la largeur d'impulsion optique, pour acquérir une première courbe de fibres totales au moyen d'une collecte ; et
l'exécution, en utilisant l'appareil de modulation en fonction du paramètre de modulation, d'une modulation d'atténuation sur la lumière sur le point d'entrer dans l'autre des liaisons par fibres à détecter, et l'exécution, une seconde fois, de la détection de fibres en fonction de la distance de détection de fibres, de la durée et de la largeur d'impulsion optique, pour acquérir une seconde courbe de fibres totales au moyen d'une collecte.

4. Procédé selon l'une quelconque des revendications 1 à 3, après l'acquisition d'un paramètre de commande de détection envoyé par un appareil de commande et de communication, comprenant en outre :
le renvoi d'une réponse d'acquisition de paramètre à l'appareil de commande et de communication.

5. Procédé de mesure de fibres, le procédé étant exécuté par un appareil de modulation et comprenant :

l'acquisition (201) d'un nombre N de liaisons de fibres à détecter et d'un paramètre de modulation qui sont envoyés par un appareil de commande et de communication, dans lequel N est un entier positif supérieur ou égal à 2 ;
pour chacune d'au moins N-1 fois qu'une fibre a été détectée par un appareil de détection à réflectomètre optique à domaine temporel, OTDR, l'exécution (202), en fonction du paramètre de modulation, d'une modulation d'atténuation de la lumière sur le point d'entrer dans la liaison par fibres à détecter, dans lequel les liaisons par fibres à détecter, correspondant à la lumière modulée sont chaque fois différentes ; et
le renvoi (203) d'une réponse de modulation à l'appareil de commande et de communication.

6. Procédé selon la revendication 5, dans lequel l'exécution (202), en fonction du paramètre de modulation, d'une modulation d'atténuation sur la lumière qui est sur le point d'entrer dans une liaison par fibres à détecter, comprend :

l'acquisition d'une valeur d'atténuation de puissance correspondant à la liaison par fibres à détecter, conformément au paramètre de modulation ; et
le réglage de l'atténuation de la lumière sur le point d'entrer dans la liaison par fibres à détecter, et la réalisation d'une modulation en fonction de la valeur d'atténuation de puissance.

7. Procédé selon la revendication 5 ou 6, après l'acquisition d'un nombre N de liaisons par fibres à détecter et d'un paramètre de modulation qui sont envoyés par un appareil de commande et de communication, dans lequel N est un entier positif supérieur ou égal à 2, comprenant en outre :
le réglage séparé de l'atténuation de la lumière sur le point d'entrer dans les N liaisons par fibres à détecter, à une valeur minimale, dans lequel la valeur minimale est une valeur d'atténuation minimale d'un appareil de modulation.

8. Appareil de détection à réflectomètre optique à domaine temporel, OTDR, comprenant :

un module d'acquisition (13) configuré pour acquérir un paramètre de commande de détection envoyé par un appareil de commande et de communication, dans lequel le paramètre de commande de détection comprend une quantité N de liaisons par fibres à détecter, une distance de détection de fibres, une durée, une largeur d'impulsion optique et un paramètre de modulation, et N est un entier positif supérieur ou égal à 2;
un module de détection (12) configuré pour effectuer N fois la détection des fibres en fonction de la distance de détection de fibres, de la durée et de la largeur d'impulsion optique, pour acquérir N courbes de fibres totales au moyen d'une collecte, dans lequel les courbes de fibres totales comprennent une courbe de fibres correspondant à la lumière formée par convergence une fois que la lumière est réfléchie séparément dans les N liaisons par fibres à détecter ; et pendant au moins N-1 fois que la détection de fibres a lieu, chaque fois qu'une détection de fibres est effectuée, la réalisation, pour la première fois, en utilisant un appareil de modulation conforme au paramètre de modulation, d'une modulation d'atténuation de la lumière sur le point d'entrer dans une liaison par fibres à détecter, dans lequel les liaisons par fibres à détecter, correspondant à la lumière modulée sont chaque fois différentes, et la modulation d'atténuation est utilisée pour moduler la lumière de manière à augmenter l'atténuation ; et
un module de calcul (11) configuré pour calculer, en utilisant un algorithme de courbe prédéfini selon les N courbes de fibres totales et le paramètre de modulation, pour acquérir les courbes de fibres respectives des N liaisons par fibres à détecter, et renvoyer les courbes de fibres à l'appareil de commande et de communication.

9. Appareil selon la revendication 8, dans lequel N=2 ; et
le module de détection (12) est spécialement configuré pour effectuer une première fois la détection de fibres en fonction de la distance de détection de fibres, de la durée et de la largeur d'impulsion optique, pour acquérir une première courve de fibres totale au moyen d'une collecte ; et effectuer, en utilisant l'appareil de modulation en fonction du paramètre de modulation, une modulation d'atténuation sur la lumière sur le point d'entrer dans l'une des liaisons par fibres à détecter, et effectuer, une seconde fois, la détection de fibres en fonction de la distance de détection de fibres, de la durée et de la largeur d'impulsion optique, pour acquérir une seconde courbe de fibres totale au moyen d'une collecte.

10. Appareil selon la revendication 8, dans lequel N=2 ; et
le module de détection (12) est spécialement configuré pour effectuer, en utilisant l'appareil de modulation en fonction du paramètre de modulation, une modulation d'atténuation sur la lumière sur le point d'entrer dans l'une des liaisons par fibres à détecter, et effectuer, une première fois, la détection de fibres en fonction de la distance de détection de fibres, de la durée et de la largeur d'impulsion optique, pour acquérir une première courbe de fibres totale au moyen d'une collecte ; et effectuer, en utilisant l'appareil de modulation en fonction du paramètre de modulation, une modulation d'atténuation sur la lumière sur le point d'entrer dans l'autre des liaisons par fibres à détecter, et effectuer, une seconde fois, la détection de fibres en fonction de la distance de détection de fibres, de la durée et de la largeur d'impulsion optique, pour acquérir une seconde courve de fibres totale au moyen d'une collecte.

**11.** Appareil selon l'une quelconque des revendications 8 à 10, comprenant en outre :
un module d'envoi (14) configuré pour renvoyer une réponse d'acquisition de paramètre à l'appareil de commande et de communication.

**12.** Appareil selon l'une quelconque des revendications 8 à 11, dans lequel le module d'envoi (14) est en outre configuré pour renvoyer un identifiant de succès de collecte à l'appareil de commande et de communication.

**13.** Appareil de modulation comprenant :

un module d'acquisition (21), configuré pour acquérir un nombre N de liaisons par fibres à détecter et un paramètre de modulation qui sont envoyés par un appareil de commande et de communication, dans lequel N est un entier positif supérieur ou égal à 2 ;
un module de modulation d'atténuation (22), configuré pour : pour chacune d'au moins N-1 fois qu'une fibre a été détectée par un appareil de détection à réflectomètre optique à domaine temporel, OTDR, effectuer, en fonction du paramètre de modulation, une modulation d'atténuation de la lumière sur le point d'entrer dans la liaison par fibres à détecter, dans lequel les liaisons par fibres à détecter, correspondant à la lumière modulée sont chaque fois différentes ; et
un module d'envoi (23), configuré pour renvoyer une réponse de modulation à l'appareil de commande et de communication.

**14.** Appareil selon la revendication 13, dans lequel le module de modulation d'atténuation (22) est spécifiquement configuré pour acquérir une valeur d'atténuation de puissance correspondant à la liaison par fibres à détecter, conformément au paramètre de modulation ; et régler l'atténuation de la lumière sur le point d'entrer dans la liaison par fibres à détecter, et effectuer une modulation en fonction de la valeur d'atténuation de puissance.

**15.** Appareil selon la revendication 13 ou 14, dans lequel le module de modulation d'atténuation (22) est en outre configuré pour régler séparément l'atténuation de la lumière sur le point d'entrer dans les N liaisons par fibres à détecter, à une valeur minimale, dans lequel la valeur minimale est une valeur d'atténuation minimale de l'appareil de modulation.

OA

OLP

Detected
light 1

Detected
light

50: 50

Reflected light

Detected
light 2

OLP

OA

OTDR
detection
apparatus

Reflected light

OTDR
detection
apparatus

OA

OA

Modulation
apparatus

Modulation
apparatus

Control and
communications
apparatus

Control and
communications
apparatus

FIG. 1

Acquire a detection control parameter sent by a control and communications apparatus, where the detection control parameter includes a quantity N of to-be-detected fiber links, a fiber detection distance, duration, an optical pulse width, and a modulation parameter, and N is a positive integer greater than or equal to 2

101

Perform N times of fiber detection according to the fiber detection distance, the duration, and the optical pulse width, to acquire N total fiber curves by means of collection, where the total fiber curves include a fiber curve corresponding to light that is formed by convergence after light is separately reflected in the N to-be-detected fiber links; and for at least N–1 times of fiber detection, each time fiber detection is performed, first perform, by using a modulation apparatus according to the modulation parameter, attenuation modulation on light that is about to enter a to-be-detected fiber link, where to-be-detected fiber links corresponding to light that is modulated each time are different, and the attenuation modulation is used to modulate the light in a manner of increasing attenuation

102

Calculate by using a preset curve algorithm according to the N total fiber curves and the modulation parameter, to acquire respective fiber curves of the N to-be-detected fiber links, and feed back the fiber curves to the control and communications apparatus

103

FIG. 2

Acquire a quantity N of to-be-detected fiber links and a modulation parameter that are sent by a control and communications apparatus, where N is a positive integer greater than or equal to 2

201

For each time of at least N–1 times of fiber detection by an optical time domain reflectometer OTDR detection apparatus, perform, according to the modulation parameter, attenuation modulation on light that is about to enter a to-be-detected fiber link, where to-be-detected fiber links corresponding to light that is modulated each time are different

202

Feed back a modulation response to the control and communications apparatus

203

FIG. 3

Send a detection control parameter to an optical time domain reflectometer OTDR detection apparatus, where the detection control parameter includes a quantity N of to-be-detected fiber links, a fiber detection distance, duration, an optical pulse width, and a modulation parameter, and N is a positive integer greater than or equal to 2, so that the OTDR detection apparatus performs N times of fiber detection according to the fiber detection distance, the duration, and the optical pulse width, to acquire N total fiber curves by means of collection, and calculates by using a preset curve algorithm according to the N total fiber curves and the modulation parameter, to acquire respective fiber curves of the N to-be-detected fiber links

301

Send the modulation parameter and the quantity N of to-be-detected fiber links to a modulation apparatus, so that for each time of at least N–1 times of fiber detection by the OTDR detection apparatus, the modulation apparatus performs, according to the modulation parameter, attenuation modulation on light that is about to enter a to-be-detected fiber link

302

FIG. 4

FIG. 5

FIG. 6

FIG. 7

```
┌─────────────────────────────┐
│                             │
│      Sending module         │ ⌇ 31
│                             │
└─────────────────────────────┘
```

FIG. 8

```
                    ┌──────────────────┐
                    │   Control and    │
                    │  communications  │ ⌇ 43
                    │    apparatus     │
                    └──────────────────┘
                     ↗↙            ↖↘

  ┌──────────────────┐          ┌──────────────────┐
41 │  OTDR detection  │ ⟺        │   Modulation     │ ⌇
  │    apparatus     │          │    apparatus     │  42
  └──────────────────┘          └──────────────────┘
```

FIG. 9

**EP 3 252 427 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014146312 A1
- WO 2011147030 A1
- EP 2755008 A2